# EUROPEAN PATENT SPECIFICATION

(11) **EP 2 837 242 B1**
(45) Date of publication and mention of the grant of the patent: **30.08.2017**
(21) Application number: 13718248.1
(22) Date of filing: 04.04.2013
(51) Int. Cl.: H04W 48/08, H04W 76/02, H04W 88/06, H04L 29/06, H04W 12/06

(54) **WIRELESS COMMUNICATION DEVICE, COMMUNICATION SYSTEM AND METHOD FOR ESTABLISHING DATA CONNECTIVITY BETWEEN A WIRELESS COMMUNICATION DEVICE AND A FIRST ACCESS NETWORK**
DRAHTLOSE KOMMUNIKATIONSVORRICHTUNG, KOMMUNIKATIONSSYSTEM UND VERFAHREN ZUR HERSTELLUNG EINER DATENKONNEKTIVITÄT ZWISCHEN EINER DRAHTLOSEN KOMMUNIKATIONSVORRICHTUNG UND EINEM ERSTEN ZUGANGSNETZWERK
DISPOSITIF DE COMMUNICATION SANS FIL, SYSTÈME DE COMMUNICATION ET PROCÉDÉ POUR ÉTABLIR UNE CONNECTIVITÉ DE DONNÉES ENTRE UN DISPOSITIF DE COMMUNICATION SANS FIL ET UN PREMIER RÉSEAU D'ACCÈS

(30) Priority: 10.04.2012 US 201213443219
(43) Date of publication of application: 18.02.2015
(73) Proprietor: Google Technology Holdings LLC, Mountain View, CA 94043 (US)
(72) Inventor: SALKINTZIS, Apostolis K., GR-15354 Athens (GR)
(74) Representative: Chettle, John Edward
(86) International application number: PCT/US2013/035201
(87) International publication number: WO 2013/154895

(56) References cited:
- US-A1- 2004 066 769
- US-A1- 2011 170 517
- 3GPP: "3rd Generation Partnership Project; Technical Specification Group Services and System Aspects; Study on S2a Mobility based On GTP & WLAN access to EPC (SaMOG); Stage 2 (Release 11)", 3GPP DRAFT; TR23.852_SAMOG_V050_RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 23 November 2011 (2011-11-23), XP050575127, [retrieved on 2011-11-23]
- INTEL ET AL: "Solution for Trusted WLAN access to EPC", 3GPP DRAFT; S2-113148V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Naantali; 20110711, 5 July 2011 (2011-07-05), XP050548468, [retrieved on 2011-07-05]
- "3rd Generation Partnership Project; Technical Specification Group Services and System Aspects; Architecture enhancements for non-3GPP accesses (Release 10)", 3GPP STANDARD; 3GPP TS 23.402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.2.0, 17 December 2010 (2010-12-17) , pages 1-228, XP050462100, [retrieved on 2010-12-17] cited in the application

## Description

### CROSS REFERENCE TO RELATED APPLICATIONS

This application is related to co-pending and co-owned U.S. patent application number 13/293374, entitled METHOD FOR ESTABLISHING DATA CONNECTIVITY BETWEEN A WIRELESS COMMUNICATION DEVICE AND A CORE NETWORK OVER AN IP ACCESS NETWORK, WIRELESS COMMUNICATION DEVICE AND COMMUNICATION SYSTEM and filed November 11, 2011.

### FIELD OF THE DISCLOSURE

This disclosure generally relates to wireless communications, and more particularly to establishing connectivity between a wireless communication device and an access network.

### BACKGROUND OF THE DISCLOSURE

The Long Term Evolution (LTE) communication standard has been developed by the 3^{rd} Generation Partnership Project (3GPP) to provide improved end user experience with full mobility. LTE supports IP-based traffic and provides data connectivity to users via an Evolved Packet Core (EPC) network and a radio access network called the Evolved UMTS Terrestrial Radio Access Network (E-UTRAN).

3GPP technical specification TS 23.402 (V11.1.0) specifies the stage 2 technical specification for providing connectivity between the EPC and a wireless communication device (commonly referred to as User Equipment or UE) by using non-3GPP accesses, such as WLANs, WiMAX, etc. Release 11 of TS 23.402, dated December 2011, is entitled "3rd Generation Partnership Project; Technical Specification Group Services and System Aspects; Architecture enhancements for non-3GPP accesses." 3GPP TS 23.402 specifies a policy element called ANDSF (Access Network Discovery & Selection) that provides access and routing selection policies to UEs in order to inform UEs which access network has the highest priority for access selection and routing purposes. The types of policies that the ANDSF can provide to UEs are discussed below. The discussion is based on the current text in clause 4.8 of TS 23.402.

An Inter-System Mobility Policy (ISMP) is applied by a UE that can use only one radio access technology for data communication. For example, the UE can use either 3GPP radio access technology, or WLAN radio access technology, but not both simultaneously. The ISMP indicates which radio access technology is preferred by the mobile operator for accessing the EPC. An example ISMP may indicate "WLAN access is preferred from 8am to 5pm" or "WLAN with SSID=x is preferred when the UE is inside Location Area Y". Note that an ISMP can have certain conditions that indicate when/where this policy is valid. In the first example above, the ISMP is valid between 8am and 5pm. When the UE determines that there is a valid ISMP that indicates access to the EPC is preferred over WLAN, the UE should discover and connect to an available WLAN (to any SSID or to a specific SSID, as per the valid ISMP) and then perform an EPC attach procedure over the WLAN. The UE will then be connected (attached) to the EPC over the preferred radio access network (WLAN in this example). The EPC attach procedure is required because the ISMP policy indicates the preferred radio access technology for attaching to the EPC.

TS 23.402 specifies several methods for the UE to attach to the EPC, such as attach over the so-called S2b interface (section 7.2), or over the so-called S2c interface (section 7.3), etc. However, the specific method used by the UE to attach to the EPC over the WLAN is outside the scope of this disclosure.

An Inter-System Routing Policy (ISRP)is applied by UEs that have (or can establish) multiple simultaneous data connections over multiple radio access technologies, for example, UEs that have one data connection over 3GPP radio access technology and another data connection over WLAN radio access technology. In such a case, an ISRP indicates how the outgoing traffic of the UE should be routed across the multiple available data connections. By means of ISRP policies, the mobile operator can affect the routing behavior of the UE in a way that (a) the user experience is improved and (b) the 3GPP radio access network is offloaded from traffic that can use WLAN access.

There are three types of ISRP policies specified in Section 4.8 of TS 23.402:

ISRP for MAPCON (Multi-Access Packet Data Network (PDN) Connectivity): These policies indicate which radio access technology should be used when the UE attempts to establish a PDN connection to a specific Access Point Name (APN). For example, an ISRP for MAPCON may indicate "PDN connections to APN=internet.example.com should be established over WLAN access," or "PDN connections to APN=ims should be established over 3GPP access." After establishing a PDN connection over the preferred radio access network (as per the ISRP for MAPCON), the UE routes all traffic pertaining to this PDN connection over this radio access network. Traffic pertaining to a specific PDN connection might be all traffic originated by a specific application. Thus, for example, the UE may route all traffic pertaining to the PDN connection to a specific APN over a WLAN and may route all other traffic over a 3GPP radio access network.

ISRP for IFOM (IP Flow Mobility): These policies indicate which radio access technology should be used for traffic that meets specific filters. For example, an ISRP for IFOM may indicate that "traffic to destination x.y.z.w should be routed via WLAN access," or "UDP traffic to destination port 5060 should be routed via 3GPP access," or "traffic from application Z should be routed via WLAN SSID=Y from 5pm to 12am". When the UE determines that there is a valid ISRP for IFOM which indicates that some traffic is preferably routed over WLAN, the UE should discover and connect to an available WLAN (if not already connected), perform an EPC attach procedure (if not already attached) and then route the indicated traffic over this WLAN. The UE will then be connected (attached) to the EPC over both WLAN access and 3GPP access and will route outgoing traffic to the preferred access based on the valid ISRP for IFOM.

ISRP for NSWO (Non-Seamless WLAN Offload): These policies indicate which traffic should be routed directly to a WLAN radio technology without going through the EPC. For example, an ISRP for NSWO may indicate that "HTTP traffic to port 80 should use WLAN access (any SSID) with non-seamless offload". Traffic using non-seamless WLAN offload refers to traffic that bypasses the EPC and is directly routed by the WLAN network. For such traffic, the UE does not need to attach to the EPC or establish a PDN connection to the EPC (as was the case with the previous two ISRP policy types).

From the above, the following conclusions can be deduced:
When the UE determines that there is a valid ISMP indicating WLAN access is preferred, the UE should connect to a WLAN and then establish a PDN connection (attach) to the EPC over this WLAN. In this case, the UE knows that the WLAN provides connectivity to the EPC and cannot be used for local services, such as access to a residential media server, because such services are not accessible over the established PDN connection to EPC.

When the UE determines that there is a valid ISRP for MAPCON indicating WLAN access is preferred for PDN connections to a specific APN, and the UE determines that a PDN connection to this APN is required (e.g. due to an application request), the UE should connect to a WLAN and then establish a PDN connection to the EPC over this WLAN. In this case, the UE knows that the WLAN provides connectivity to the EPC and cannot be used for local services, such as access to a residential media server, because such services are not accessible over the established PDN connection to the EPC.

When the UE determines that there is a valid ISRP for IFOM indicating WLAN access is preferred for specific traffic, the UE should connect to a WLAN and then establish a PDN connection to EPC over this WLAN. In this case, the UE knows that the WLAN provides connectivity to EPC and cannot be used for local services, such as access to a residential media server, because such services are not accessible over the established PDN connection to the EPC.

When the UE determines that there is a valid ISRP for NSWO indicating WLAN access is preferred for specific traffic, the UE should connect to a WLAN but should not establish a PDN connection to the EPC over this WLAN. In this case, the UE knows that the WLAN does not provide access to the EPC and can be used for local services, such as access to a residential media server.

In all of the above cases, the UE knows the type of connectivity provided by the WLAN it is connected to and can tailor its behavior accordingly. For example, the UE can disable Digital Living Network Alliance (DLNA) services or other local services when the WLAN provides EPC connectivity (through an established PDN connection). However, there are circumstances when the UE does not know the type of connectivity provided by a WLAN network, which can give rise to several issues.

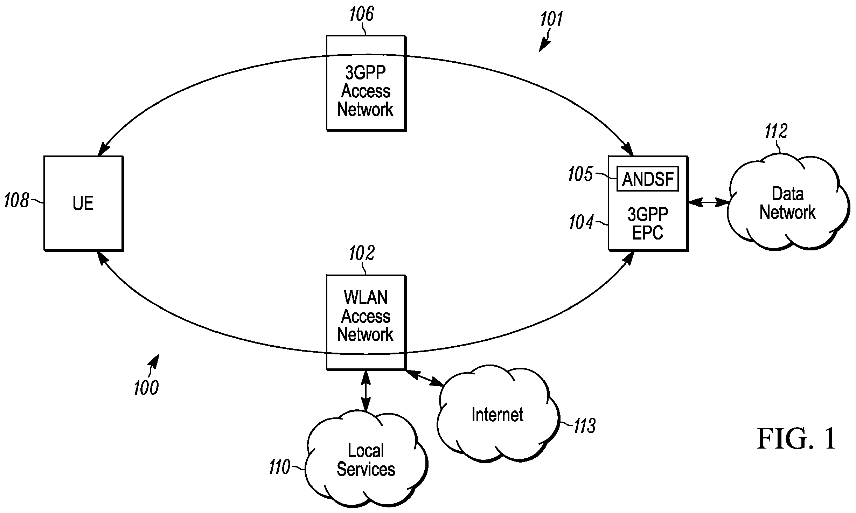

The 3GPP working group SA2 has recently been working on a new work item called "S2a Mobility based On GTP & WLAN access to EPC" (SaMOG for short) which (a) enables WLANs to be considered as trusted access networks that provide connectivity to the EPC and (b) provides General Packet Radio Service (GPRS) Tunnelling Protocol (GTP) connectivity between the WLAN and EPC. The results of the corresponding study in 3GPP are documented in 3GPP Technical Report TR 23.852 (V1.0.0). In the context of this new work item, a new type of connectivity via WLAN has been specified (commonly referred to as "SaMOG connectivity"). This is schematically illustrated in FIG. 1. The UE 108 establishes a WLAN connection, for example, because it determines that an ISRP for NSWO has become valid or because of other implementation specific triggers, such as the user arriving home and the UE 108 is configured to always connect to the home WLAN when available. After connecting to WLAN access network 102, the UE 108 does not establish any PDN connection to the EPC 104 because the WLAN access network 102 is meant to be used for non-seamless offload (i.e. to bypass EPC 104). Therefore, the UE 108 operates as if the WLAN access network 102 does not send traffic to the EPC 104 and as if the WLAN 102 can provide access to local services 110 (e.g. services in a residential network) as well as direct access to external data networks, such as the Internet 113. However, if the WLAN 102 is configured (e.g. by administrative means) to provide the so-called SaMOG type of connectivity, the WLAN 102 establishes connectivity to the EPC 104 (e.g. via a GTP or Proxy Mobile IP (PMIP) tunnel) and forwards all traffic from the UE 108 to the EPC 104. This is totally transparent to the UE 108.

When the WLAN 102 is configured to provide SaMOG connectivity but the UE 108 does not know this (i.e. the UE operates as if the WLAN 102 provides non-seamless offload and bypasses EPC 104), several issues can arise as explained in document S2-115008 entitled "Considerations for Deployments without UE Impact." For example:

User experience will be impacted since a user will be unable to contact local services or resources in enterprise and/or residential WLANs where the user is accustomed to accessing local services, such as file servers, print servers, DLNA media servers, etc.

The user is under the impression that data traffic is handled entirely in a WLAN that provides flat billing or even free connectivity but in reality data traffic goes through the EPC and may be charged at a higher rate based on data volume.

Internet connectivity is not possible if the EPC prevents data coming from the GTP/PMIP tunnel to the Internet, unless the default APN for SaMOG provides Internet access.

The UE will attempt to enable local services such as DLNA-based services (without success since all of the UE's traffic is routed to the EPC) which will result in unnecessary battery consumption.

In addition to the above issues, when the UE does not know that a WLAN provides SaMOG connectivity, it will not provide to the WLAN the necessary connectivity parameters required for the establishment of the GTP/PMIP tunnel between the WLAN and the EPC. Such connectivity parameters include the following:

Access Point Name (APN) parameter which indicates the service or packet data network the UE wants to connect to (e.g. Internet, IMS, etc.);

Packet Data Protocol/ Packet Data Network (PDP/PDN) Type parameter which indicates the type of connectivity requested by the UE, such as, IPv4, IPv6, or both so that the EPC knows what IP address to assign to the UE;

Attach Type parameter which indicates whether the UE attach is for creating a new PDP/PDN connection for normal services ("initial attach") or for emergency services ("emergency attach") or for handing over an existing PDP/PDN connection say from UTRAN to WLAN ("handover attach").

Thus, a need exists for the UE to determine whether a WLAN provides SaMOG connectivity or not. 3GPP: "3rd Generation Partnership Project: Technical Specification Group Services and System Aspects; Study on S2a Mobility based On GTP GTP & WLAN access to EPC (SaMOG); Stage 2 (Release 11)" presents a study on S2a mobility based on GTP GTP & WLAN access to EPC (SaMOG). United States patent application publication number US 2011/1750517 A1 makes a disclosure in which "local IP Access (LIPA) allows an IP-capable user equipment (UE) connected via a femto cell direct access to other IP-capable devices in the local IP network".

### BRIEF DESCRIPTION OF THE DRAWINGS

A wireless communication device, communication system and method for establishing data connectivity between a wireless communication device and a first access network in accordance with different aspects of the disclosure will now be described, by way of example only, with reference to the accompanying drawings in which:
FIG. 1 is a block schematic diagram of a communication system;
FIG. 2 is a block schematic diagram of a wireless communication device in accordance with an example embodiment of the present disclosure;
FIG. 3 is a flow diagram showing an example method for establishing data connectivity between a wireless communication device and a first access network in accordance with an embodiment of the disclosure;
FIG. 4 is a block schematic diagram of a communication system showing an example mechanism for providing information to a wireless communication device identifying a connectivity type of a first access network in accordance with the disclosure; and
FIG. 5 is a diagram showing an example message flow for authentication between a wireless communication device and a second access network over a first access network in accordance with an example embodiment of the disclosure.

### DETAILED DESCRIPTION

The invention is defined by the appended claims. The present disclosure will be described with reference to a LTE communication system and establishing data connectivity between a wireless communication device and a WLAN access network that may be configured to establish a connection to a core network of the LTE communication system (i.e. the Evolved Packet Core (EPC)) and to tunnel all data traffic from the wireless communication device to the EPC. It will however be appreciated that the present disclosure may apply to first access networks other than WLAN, such as WiMAX or Bluetooth access networks or other IP access networks, that can be configured to tunnel traffic from a wireless communication device to the EPC. Furthermore, the present disclosure may apply to second access networks other than an EPC of a LTE communication system, such as packet switched domains of GPRS or UMTS communication systems or other 3GPP2 packet communication systems, or ISP, or any other interworking access network. By describing the disclosure with respect to a core network (EPC) and a WLAN access network, it is not intended to limit the disclosure in any way.

The wireless communication device in accordance with the disclosure may be a portable or mobile telephone, a Personal Digital Assistant (PDA), a wireless video or multimedia device, a portable computer, a netbook, a tablet device, an embedded communication processor or similar wireless communication device. In the following description, the communication device will be referred to generally as user equipment, UE, for illustrative purposes and it is not intended to limit the disclosure to any particular type of wireless communication device.

An example of a communication system in accordance with the disclosure is the communication system shown in FIG. 1. As discussed above with reference to FIG. 1, the communication system comprises 3GPP communication system 101 (a LTE communication system) including a 3GPP core network (the EPC 104) and a 3GPP access network 106 (E-UTRAN for a LTE communication system) communicably coupled to the EPC 104, a WLAN access network 102 communicably coupled to the EPC 104 (e.g. via interfaces STa and S2a), and a UE 108. It will be appreciated that there will be a plurality of UEs and only one is shown for simplicity.

The EPC 104 includes elements such as Access Network Discovery & Selection Function (ANDSF) 105, and although not shown in FIG. 1, an authentication, authorization and accounting (AAA) server, a Home Location Register/Home Subscriber Server (HLR/HSS), and at least one PDN-GW which provide connectivity to external data networks 112, such as the Internet or a network that provides MMS services. The function of the ANDSF element 105 is to assist UEs to discover non-3GPP access networks, such as WLAN or WiMAX, that can be used for data communications in addition to 3GPP access networks and to provide the UE with rules policing the connection to these networks. The structure of a LTE communication system is well known in the art.

The WLAN access network 102 may or may not be in a different administrative domain (e.g. managed by a different operator) than the 3GPP communications system 101.

The WLAN access network 102 is configured to provide or support a particular connectivity type. A WLAN access network is configured to support a first connectivity type when the WLAN is configured to establish a connection to a second access network and to tunnel all data traffic from the UE to the second access network (e.g. the core network of the second access network). With reference to the elements of FIG. 1, the WLAN access network 102 has a first connectivity type when the WLAN access network 102 is configured to establish a connection to the EPC 104 of the LTE communications system 101 and to tunnel all data traffic from the UE 108 to the EPC 104. With reference to the description in the introduction, the first connectivity type may be considered as "SaMOG connectivity". A WLAN access network is configured to support a second connectivity type when the WLAN is configured to not establish a connection to the second access network (e.g. EPC 104) and to provide direct access to services: for example, direct access to local services 110, such as enterprise or residential services and/or direct access to external data networks, such as the Internet 113.

The local services 110 include any services accessed via the WLAN 102 and without using a second wireless access network. Depending on the location of the WLAN access network 102 and the resources coupled to the WLAN access network 102, the local services 110 may include access to a residential media server, a file server, print server, DLNA media server, private web server or modem for connection to the Internet.

The connectivity type of a WLAN access network is determined by the WLAN operator who configures the WLAN either to establish connectivity to a second access network when a specific subscriber (UE) attaches to the WLAN and tunnel all data traffic from this subscriber to the second access network (i.e. configures the WLAN access network to support the first connectivity type), or to not establish connectivity to a second access network and to access local services and external data networks directly(i.e. configures the WLAN access network to support the second connectivity type). The latter case is the most commonly used today. When the WLAN and the second access network belong to administratively different domains, the connectivity between the WLAN and the second access network is governed by business agreements between the two operators. The connectivity type of the WLAN access network may be changed by the WLAN operator at any time (e.g. when there is a change in business agreement between the WLAN operator and the operator of the second access network). The connectivity type of the WLAN access network may be changed by changing for example protocols/ policies in the WLAN access network.

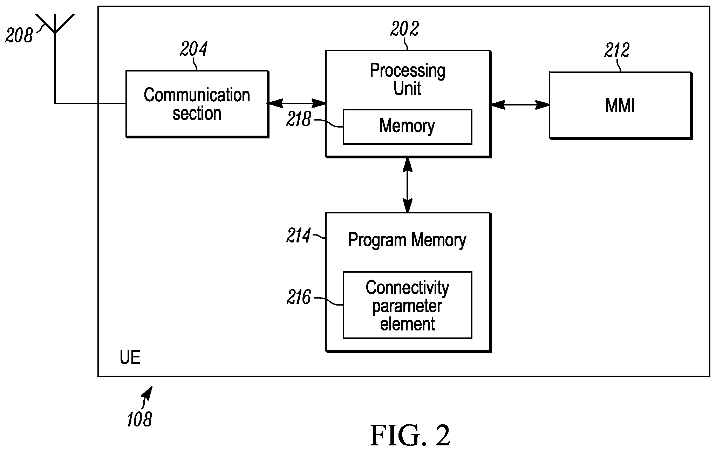

FIG. 2 is a block diagram of a wireless communication device, such as a UE 108 shown in FIG. 1, in accordance with an example embodiment of the disclosure. As will be apparent to a person of ordinary skill in the art, FIG. 2 shows only the main functional components of an exemplary UE 108 that are necessary for an understanding of the disclosure herein.

The UE 108 comprises a processing unit 202 for carrying out operational processing for the UE 108. The UE 108 also has a communication section 204 for providing wireless communication via a radio communication link with, for example, an eNodeB (not shown) of the E-UTRAN (not shown) of the LTE communication system 101 or an access point or node (not shown) of the WLAN access network 102. The communication section 204 may comprise elements which are part of a LTE radio access interface of the UE 108 and elements which are part of a WLAN radio access interface of the UE 108. The communication section 204 typically includes at least one antenna 208, a receiver (not shown) and a transmitter (not shown), at least one modulation/ demodulation section (not shown), and at least one coding/ decoding section (not shown), for example, as will be known to a person of ordinary skill in the art and thus will not be described further herein. The communication section 204 may include one set of elements for the LTE radio access interface and one set of elements for the WLAN access interface or the interfaces may share elements. The communication section 204 is coupled to the processing unit 202.

The UE 108 also has a Man Machine Interface MMI 212, including elements such as a key pad, microphone, speaker, display screen (all not shown), for providing an interface between the mobile device and the user of the UE 108. The MMI 212 is also coupled to the processing unit 202.

The processing unit 202 may be a single processor or may comprise two or more processors carrying out all processing required for the operation of the UE 108. The number of processors and the allocation of processing functions to the processing unit is a matter of design choice for a skilled person. The UE 108 also has a program memory 214 in which are stored programs containing processor instructions for operation of the UE 108 by means of the processing unit 202. The programs may contain a number of different program elements or sub-routines containing processor instructions for a variety of different tasks, such as: communicating with the user via the MMI 212; processing signalling messages (e.g. paging signals) received from the E-UTRAN (not shown) and WLAN access network 102; and performing neighboring coverage area measurements. Specific program elements stored in program memory 214 include a connectivity parameter element 216 for providing required connectivity parameters for establishing a requested data connectivity. The operation of the connectivity parameter element 216 will be described in more detail below.

The UE 108 may further include a memory 218 for storing information. The memory 218 is shown in FIG. 2 as part of the processing unit 202 but may instead be separate.

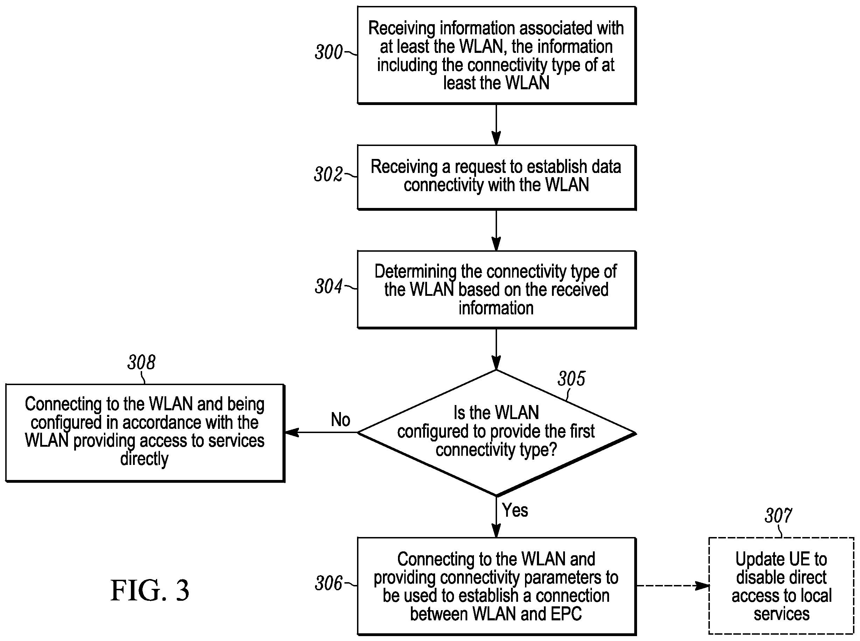

Reference is made now to FIG. 3 which shows steps of a method for establishing data connectivity between a wireless communication device (such as UE 108 of FIG. 1) and a first access network (such as WLAN access network 102 of FIG. 1) in accordance with an example embodiment of the disclosure. The method shall be described with reference to the communication system 100 of FIG. 1 and the UE 108 of FIG. 2 by way of example. It is not intended to limit the invention to the particular types of networks shown and described with reference to FIG. 1.

In step 300, the UE 108 receives information associated with at least the WLAN access network 102. The information includes the connectivity type of at least the WLAN access network 102. As indicated above, the WLAN access network 102 may be configured to provide the first connectivity type (e.g. SaMOG connectivity) or the second connectivity type. The information may be received by the UE 108, stored in memory (e.g. memory 218) and then retrieved from memory for subsequent processing under the control of the processing unit 202. Alternatively, the information may be received and contemporaneously processed under the control of the processing unit 202.

In an example arrangement, the UE 108 receives information associated with preferred access networks for the UE 108. The information includes the identity of the preferred access networks and the connectivity type of each of the preferred access networks. The preferred access networks include the WLAN access network 102. The information concerning the preferred access networks may be provided for example by an ANDSF element 105 of the EPC 104 or an ANDSF element of another access network (such as the home PLMN of the UE 108).

In an alternative example arrangement, the UE 108 may receive information associated with the WLAN access network 102 which indicates the connectivity type of the WLAN access network 102 during a discovery procedure initiated to discover the capabilities of the WLAN access network 102. The discovery procedure may be a discovery procedure specified in IEEE 802.11u (IEEE 802.11u: An amendment to the IEEE 802.11-2007: "Part 11: Wireless LAN Medium Access Control (MAC) and Physical Layer (PHY) Specifications", Jun. 2007), or the UE can use the Extensible Authentication Protocol EAP-based procedures specified in RFC 4284 (RFC4284: Identity Selection Hints for the Extensible Authentication Protocol (EAP), Jan. 2006).

In another alternative example arrangement, the UE 108 may receive information associated with the WLAN access network 102 which indicates the connectivity type of the WLAN access network 102 during an authentication procedure for authenticating and authorising the UE 108 for access to the WLAN access network 102. For example, the connectivity type of the WLAN access network 102 may be provided to the UE 108 during an Extensible Authentication Protocol of the UE 108, such as during EAP-AKA or EAP-SIM authentication.

In yet another alternative example arrangement, the UE 108 may receive information associated with at least the WLAN access network 102 which indicates the connectivity type of the WLAN access network 102 during static configuration of the UE 108 (e.g. at the time of manufacture or subsequently, when the UE is updated by connecting the UE to a computer or by user configuration).

More details of the example arrangements by which the UE 108 is provided the connectivity type of the WLAN access network 102 will be given below.

In step 302, a request to establish data connectivity with the WLAN access network 102 is received at the UE 108. The request may be from a user of the UE 108 (e.g. user input via the MMI 212) or may be from an application running on the UE 108. The UE 108 (e.g. by means of the processing unit 202) determines the connectivity type of the WLAN access network 102 based on the connectivity type specified in the received information, step 304.

In response to determining that the WLAN access network 102 is configured to provide the first connectivity type from the received information (step 305), the UE 108 (e.g. by means of the processing unit 202) connects to the WLAN access network 102 (step 306) and provides connectivity parameters to be used to establish a connection between the WLAN access network 102 and the EPC 104 to provide the data connectivity requested between the UE 108 and EPC 104.

The UE 108 (e.g. by means of the processing unit 202 under the control of the connectivity parameter element 216) provides or determines the connectivity parameters or data required for establishing data connectivity between the WLAN access network 102 and the second access network (e.g. EPC 104). The required connectivity parameters may include:

Access Point Name (APN) which indicates the service or packet data network the UE wants to connect to;

Packet Data Protocol or Packet Data Network (PDP/PDN) Type which indicates the type of connectivity requested by the UE, such as, IPv4, IPv6, or both so that the EPC knows what IP address to assign to the UE;

Attach Type which indicates whether the UE attach is for creating a new PDP/PDN connection for normal services ("initial attach") or for emergency services ("emergency attach") or for handing over an existing PDP/PDN connection say from UTRAN to WLAN ("handover attach");

Quality of Service (QoS) which indicates the level of service required or preferred by the user of the UE for the data connectivity requested.

Other connectivity parameters may also be specified by the UE 108. For example, if a user of the UE 108 or an application running on the UE 108 wants to access a web page or service on the Internet, the connectivity parameters may include an APN such as internet.operator.com (which is preconfigured in the UE 110 as an APN that provides Internet access), a PDP/PDN Type such as IPv4v6 (if the UE supports both IPv4 and IPv6 addressing schemes) and an Attach Type such as "initial attach". The APN of the requested service/data network may be preconfigured in the UE 108.

Briefly, an authentication procedure is initiated (typically initiated by the WLAN access network 102) with the EPC 104 in order to authenticate and authorize the UE 108 for access to the EPC 104 over the WLAN access network 102. The authentication procedure is triggered by the UE 108 (e.g. by means of the processing unit 202) in response to receiving the request to establish data connectivity. The authentication procedure may be any type of EAP. For example, the EAP-AKA procedure may be used but other schemes may instead be used, such as EAP-SIM.

An authentication request message is received at the UE 108 in response to an authentication procedure being initiated.

The UE 108 (e.g. by means of the processing unit 202) sends a response to the authentication request message and the response includes the required connectivity parameters.

In an example arrangement, the response may include a new attribute, called AT_CONN_IND, which indicates the required or preferred connectivity parameters, such as the preferred APN, the PDP/PDN Type, the Attach Type, etc. As an example, the contents of the attribute AT_CONN_IND may be as shown in Table 1.

**Table 1: Example contents of AT_CONN_IND**

| Connectivity parameter in AT_CONN_IND | Value |
|---|---|
| PDP/PDN Type | IPv4 or IPv6 or IPv4v6 |
| Attach Type | "Initial Attach" or "Handover Attach" |
| APN | Character string with the value of the requested APN. |
| QoS | Required QoS of the transport channel between the UE and PDN-GW. |
| Possibly other connectivity parameters | ... |

A data connection is then established between the EPC 104 and the WLAN 102 with the required connectivity parameters after the authentication procedure is completed. In other words, once the authentication procedure has been completed successfully and the UE 108 has been authenticated and authorized for access to the EPC 104 via the WLAN access network 102 and with the required connectivity parameters, a data connection is established between the EPC 104 and the WLAN access network 102. This data connection is subsequently used by the WLAN access network 102 to tunnel all data traffic between the UE 108 and EPC 104. Although the UE 108 does not take part in the establishment of this data connection and in the subsequent tunnelling procedure, the UE 108 can affect the characteristics of the data connection by providing to the WLAN access network 102 the preferred connectivity parameters (such as APN, PDP type, etc.). In this way, the established data connection is used to transport all UE 108 data traffic to/from the EPC 104.

Other methods may be used by the UE 108 to connect (attach) to the EPC 104 over the WLAN 102 and provide the connectivity parameters to be used to establish a connection between the WLAN 102 and EPC 104 and it is not intended that the disclosure be limited to any one method.

After connecting to the WLAN access network 102 when the WLAN access network 102 is configured to provide the first connectivity type, at step 307, the UE 108 may be updated to disable functions required for direct access to local services (e.g. disable access to local services) because these services are not available due to the data tunnelling enforced by the UE 108. This helps to reduce battery consumption. The UE 108 may, additionally or alternatively, notify the user (e.g. via the MMI 212 under the control of the processing unit 202), or enable services which are known to be provided by the EPC 104 or to be accessible via the EPC 104.

Referring back to step 305, when the UE 108 determines that the WLAN access network 102 is configured to provide the second connectivity type from the received information, the UE 108 (e.g. by means of the processing unit 202) connects to the WLAN access network 102 and is configured in accordance with the WLAN access network 102 providing access to services directly (e.g. to access directly local services 110 and/or to access directly external networks, such as the Internet 113), step 308. In other words, the UE 108 connects to the WLAN access network 102 and the UE 108 is configured to know that the WLAN access network 102 is arranged to provide access to services directly (and not via a second access network). The UE 108 may connect to the WLAN access network 102 using procedures well known in the art. In addition, the UE 108 need not provide any connectivity parameters to be used to establish a connection between the WLAN access network 102 and EPC 104 since there will be no data connection established between the WLAN access network 102 and EPC 104.

As discussed above, the UE 108 may be informed as to whether a WLAN is configured to provide the first connectivity type (e.g. SaMOG connectivity) or not using alternative example solutions. One such solution is based on an ANDSF element that provides extended ISMP and ISRP policies to the UE that identify when a specific WLAN is configured to provide the first connectivity type (e.g. SaMOG connectivity). It is called a Layer-3 solution because it is independent of the access (layer-2) technology and is supported at the IP level. In other words, the connectivity type of a specific WLAN can be communicated to the UE 108 by an ANDSF element over any type of access network, including a 3GPP access, a 3GPP2 access, WiMAX, WLAN, etc. The ANDSF element may be the ANDSF element 105 of the EPC 104 or an ANDSF element of another access network (such as the home PLMN of the UE 108). An alternative solution proposes extensions to IEEE 802.11u and RFC 4284, and is called a Layer-2 solution because it is provided by the access network. Another solution is based on information provided to the UE 108 during authentication of the UE 108. If the UE 108 determines that the WLAN access network 102 can support SaMOG connectivity (via any of the solutions), then the UE 108 connects to the WLAN access network 102 and provides the connectivity parameters as described above.

As discussed above, an ANDSF element (such as ANDSF element 105) provides access and routing selection policies (e.g. the ISMP and ISRP) to the UE 108 in OMA Device Management (DM) objects. The access and routing selection policies indicate the preferred access networks for the UE 108. The Layer-3 solution (ANDSF based) in accordance with the disclosure extends the information provided to the UE 108 in the OMA Device Management (DM) objects to also include for WLAN access networks, information indicating whether the WLAN access networks support the first connectivity type (e.g. SaMOG connectivity to EPC 104) or not. For example, for each WLAN access network, identified by a unique SSID or by a unique realm (e.g. wlan1.operator.com), the information provided to the UE 108 includes whether SaMOG connectivity is supported or not.

If the UE 108 determines that a WLAN access network 102 supports SaMOG connectivity and the UE 108 is triggered to select this WLAN (e.g. based on information provided in a valid ISMP or ISRP policy or because of other implementation specific triggers, such as implementation-based policies), the UE 108 will provide to the WLAN access network 102 the necessary connectivity parameters (e.g. APN, PDN type, etc.) required to establish the GTP/PMIP tunnel towards EPC 104.

Since the information sent to the UE with this solution can be specified for each UE, this solution can support scenarios where the same WLAN access network 102 provides the first connectivity type (e.g. SaMOG connectivity) to some UEs and the second connectivity type (e.g. non-seamless offload connectivity (i.e. direct connectivity bypassing EPC 104)) to other UEs. Being able to select different connectivity types of the WLAN for different UEs provides increased flexibility to mobile operators. For example, a mobile operator may configure different WLAN connectivity types to different users based on different subscription parameters.

Currently, a UE can discover the capabilities of a WLAN by using procedures specified in IEEE 802.11u (currently part of IEEE 802.11-2007). When IEEE 802.11u is not supported, the UE can use the EAP-based procedures specified in RFC 4284 to discover which networks (realms) can interwork with a WLAN.

The Layer-2 solution in accordance with the disclosure extends the discovery functionality provided by IEEE 802.11u and RFC 4284 so that the UE 108 can discover if the WLAN access network 102 supports the first connectivity type (e.g. SaMOG connectivity) towards a specific access network. The specific access network may be one of several access networks (also known as interworking networks) to which the WLAN access network 102 may connect. Interworking means that the WLAN access network 102 and a second access network (the interworking network) have setup a "roaming agreement" which enables subscribers of the second access network to connect and use the WLAN access network.

By using the above discovery procedures the UE 108 discovers information about all second access networks that interwork with the WLAN access network, as known in the prior art. According to the Layer-2 solution, the discovery information received by the UE 108 is extended so that a new first connectivity type support indicator (e.g. *"SaMOG connectivity support"* indicator) is added to the information pertaining to every discovered second access network. Therefore, by means of this new *"SaMOG connectivity support"* indicator, the UE 108 can determine if the WLAN access network 102 is configured to establish "SaMOG connectivity" to a particular second access network that interworks with the WLAN access network 102. If the WLAN access network 102 can connect to more than one second (interworking) network, then a plurality of indicators will be provided to the UE 108.

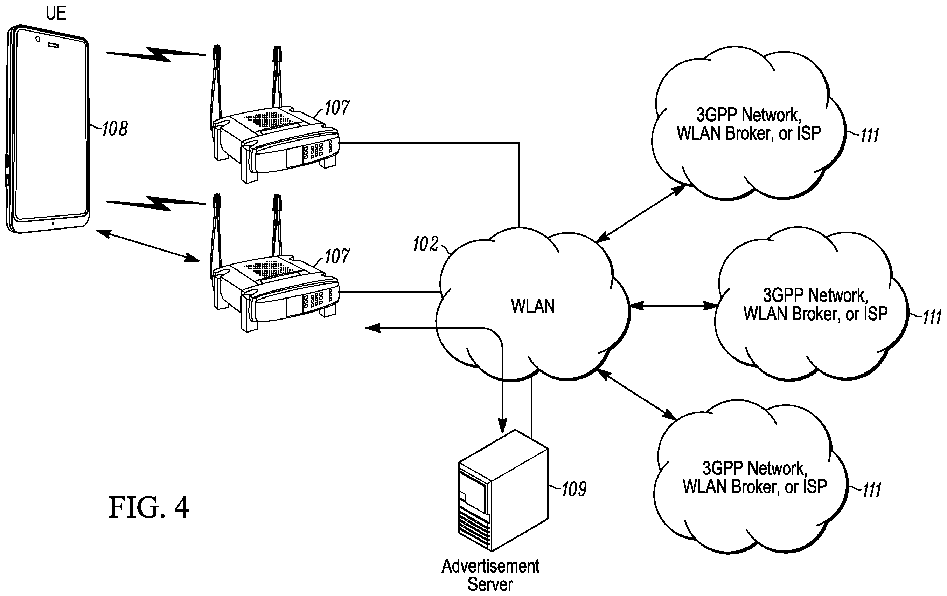

Referring now also to FIG. 4 which shows a UE 108 using Access Network Query Protocol (ANQP) procedures to discover the capabilities of WLAN access network 102 and to determine based on the "SaMOG connectivity support" indicator if the WLAN access network 102 is configured to create a compulsory tunnel to an interworking network 111 (i.e. the second access network). Other discovery protocols may be used by the UE instead. The interworking network 111 may be a 3GPP network (e.g. network 101 as in FIG. 1), WLAN broker (i.e. a network supporting WLAN roaming between different WLAN operators) or ISP. Like components of FIG. 1 are referenced by the same reference numeral. If the UE 108 determines from the "SaMOG connectivity support" indicator that the WLAN 102 creates a compulsory tunnel to an interworking network 111, the UE 108 can then tailor its behavior accordingly, e.g. notify the user, disable direct access to local services (such as DLNA services), enable services provided by the interworking network, etc.

The "SaMOG connectivity support" indicator can be included in an existing IEEE 802.11u information element (e.g. in the NAI Realm List or the 3GPP Cellular Network Info) or it could be included in a vendor specific information element sent to the UE 108. In the example shown in FIG. 4, information concerning the WLAN access network 102, which includes a list of interworking networks of WLAN access network 102 and the "SaMOG connectivity support" indicators for each of the interworking networks of WLAN access network 102, is stored in a server 109 (e.g. advertisement server) communicably coupled to WLAN access network 102. The list of interworking networks and associated "SaMOG connectivity support" indicators may be sent to the UE 108 from the server 109 via the WLAN access network 102 by means of the ANQP or MIH-IS protocols and transported by Generic Advertisement Service (GAS) frames.

When the UE 108 uses RFC 4284 to discover the interworking capabilities of a WLAN access network 102, the UE 108 receives a list of interworking networks for WLAN access network 102 in the EAP-Identity Request message transmitted by an access node (e.g. Access Point (AP) 107) of the WLAN access network 102. In accordance with the disclosure, this list is extended to include for each interworking network a first connectivity type indicator (e.g. "SaMOG connectivity support" indicator) which indicates whether the WLAN access network 102 can support the first connectivity type for that interworking network.

One drawback of the Layer-2 solution is that the "SaMOG connectivity support" indicator will have to be the same for all UEs for a particular interworking network. The WLAN would have to be configured to provide SaMOG connectivity for a specific interworking network either for all UEs or for none.

Another solution in accordance with the disclosure is based on information provided to the UE 108 during authentication of the UE 108. The information may be sent from the AAA server of the EPC 104 to the UE 108 during the EAP authentication, such as an EAP-AKA authentication. This information indicates the connectivity type supported by the WLAN 102 to which the UE 108 attempts to connect.

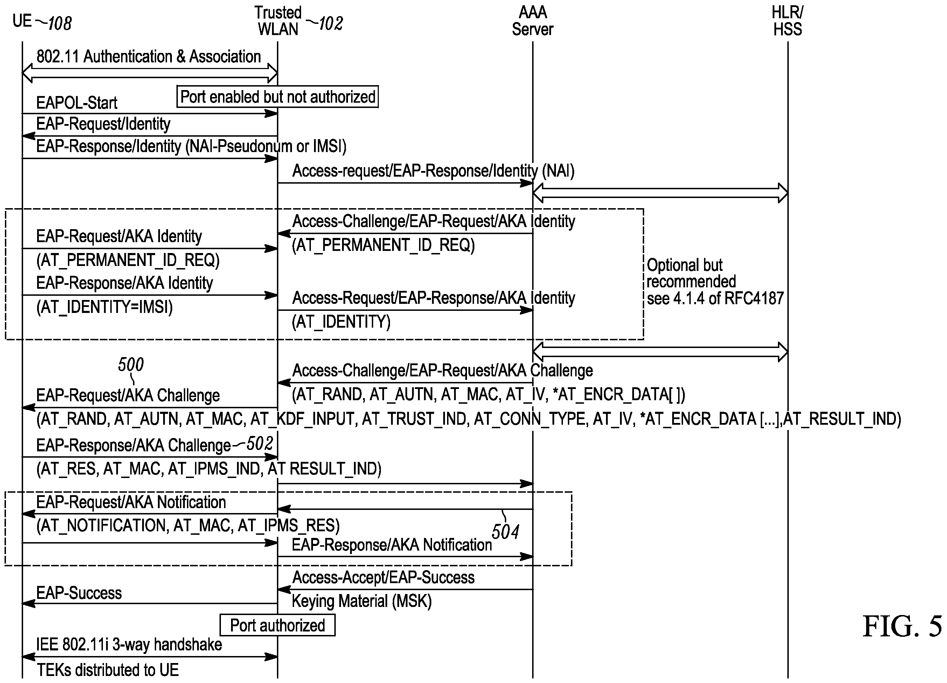

For more details of the operation of the UE 108 in accordance with the EAP-AKA authentication solution, the operation will now be described with reference to FIG. 5 which shows an example message flow for a EAP-AKA authentication procedure between a UE (such as UE 108 of FIG. 1) and a core network (such as EPC 104 of FIG. 1) over an IP access network (such as WLAN access network 102 of FIG. 1) in accordance with an embodiment of the disclosure. FIG. 5 shows an EAP-AKA authentication method that complies with the applicable IETF standards and 3GPP specifications: RFC4187: Extensible Authentication Protocol Method for 3rd Generation Authentication and Key Agreement (EAP-AKA), Jan. 2006; RFC5448: Improved Extensible Authentication Protocol Method for 3rd Generation Authentication and Key Agreement (EAP-AKA'), May 2009; and 3GPP TS 24.302 (v10.4.0), Access to the 3GPP Evolved Packet Core (EPC) via non-3GPP access networks; Stage 3 (Release 10), Jun. 2011. In an example arrangement, the EAP-AKA authentication takes place when a UE 108 attempts to access the EPC 104 over a WLAN access network 102 that is considered trusted by the home 3GPP operator.

As shown in FIG. 5, the first AKA Challenge sent by the AAA server in step 500 includes an AT_TRUST_IND attribute which informs the UE 108 of whether the WLAN 102 is considered as a trusted or un-trusted access network (the encoding of this attribute is specified in TS 24.302, clause 8.2.3.1). This AKA Challenge sent by the AAA server corresponds to the authentication request message sent to the UE 108 in response to an authentication procedure being initiated as discussed above. In the response message (EAP-Response/AKA Challenge), step 502, the UE 108 may include an AT_IPMS_IND attribute that indicates the mobility management capabilities of the UE (see Table 8.2.1.1 of TS 24.302).

This enables the network to know what type of mobility management mechanism can be used to support mobility management over the trusted WLAN access. The AT_IPMS_RES attribute (sent in step 504) indicates to the UE 108 the mobility management protocol selected by the AAA server, e.g. Host Base Mobility (DSMIPv6 or MIPv4) or Network Based Mobility (NBM). After the end of the authentication procedure of FIG. 5, the UE 108 behaves according to the mobility protocol indicated in the AT_IPMS_RES attribute or, if the AT_IPMS_RES attribute is not received from the core network, according to data pre-configured in the UE. For example, if the mobility protocol is DSMIPv6, the UE 108 will need to select a PDN-GW (or Home Agent), establish a security association with the selected PDN-GW and then perform a binding registration with the DSMIPv6 protocol. In this case, the UE can include the required connectivity parameters into one or more DSMIPv6 messages. All these procedures are specified in 3GPP TS 24.303 (v10.3.0), Mobility management based on Dual-Stack Mobile IPv6; Stage 3 (Release 10). If on the other hand the mobility protocol in the AT_IPMS_RES attribute is NBM, the UE 108 does not need to use any mobility management protocol because all mobility is enabled by network-based procedures (i.e. with GTP).

As discussed above, the UE 108 may include in the response sent at step 502 a new attribute, which indicates the required or preferred connectivity parameters, such as the preferred APN, the PDP/PDN Type, the Attach Type, etc. As an example, the contents of the new attribute AT_CONN_IND may be as shown in Table 1 above.

As an example and with reference to FIG. 5, the connectivity type may be sent from the AAA server to UE 108 with a new EAP-AKA attribute, called AT_CONN_TYPE. In other words, the attribute AT_CONN_TYPE indicates whether the WLAN access network 102 that the UE attempts to connect to is configured to support the first connectivity type (e.g. SaMOG connectivity) or second connectivity type. The AT_CONN_TYPE attribute may be included in the first AKA challenge message, step 500, or in the AKA Notification message, step 504, sent by the AAA server to UE 108. Alternatively, the connectivity type may be included in an existing EAP-AKA attribute that is suitably extended to carry also information indicating the connectivity type of the WLAN access network 102. For example, the existing AT_IPMS_RES attribute sent by the AAA server in step 504 may be extended to include information indicating the connectivity type.

In case the UE wants an additional PDP/PDN connection over the trusted WLAN access network, it can trigger an EAP Re-authentication with new connectivity data. So, multiple PDP/PDN connections can be supported. Also, handover of PDP/PDN connections from 3GPP access to trusted WLAN with S2a can be supported too by requesting a PDP/PDN Type of "handover attach". In this case, the PDN-GW will transfer all data exchanged on an existing PDP/PDN connection over 3GPP access to the PDP/PDN connection created (over S2a) between the WLAN access network and the PDN-GW.

In summary, the disclosure describes a mechanism for providing information to a UE about the connectivity type supported by a first access network and, depending on the indicated connectivity type of the first access network, the wireless communication device can then behave accordingly. For example, when the first access network supports the first connectivity type and so is configured to tunnel all data traffic from the UE to a second access network (e.g. supports SaMOG connectivity), the UE can provide the connectivity parameters needed to set up the connection between the first access network and the second access network and the UE may also disable direct access to local services so as to conserve battery consumption and improve user experience. Since the UE provides the connectivity parameters, the UE can provide preferred/required connectivity parameters such that the data connectivity between the first and second access networks can be established in accordance with the UE or user preferences. When the first access network supports the second connectivity type and so is configured to provide direct access with no connection via the second access network, the UE may then connect to the first access network in a normal way. The UE may also notify the user of the connectivity type of the first access network and the user may act accordingly. For example, when the first access network supports the first connectivity type, the user is now aware that direct access to local services is not possible which avoids any negative user experiences. In addition, the user may decide to disconnect from the first access network when it is determined to support the first connectivity type.

Mobile operators can create/ terminate business relationships with WLAN providers frequently which can result in changes in the configuration of an existing WLAN with SaMOG connectivity enabled or disabled at any time and/or new WLANs being supported by the mobile operator, each one configured with or without SaMOG connectivity. The information identifying the connectivity type of the first access network is provided to the UE by mechanisms in accordance with disclosure which enable changes in the connectivity type of access networks, or when new access networks are added, to be accounted for easily. For example, the preferred list of access networks can be updated easily at the ANDSF 105 to account for changes and updated lists provided to the UE regularly, e.g. by invoking OMA DM push procedures. Any changes to the connectivity type of an access network will be included in the information provided during a discovery procedure for that access network. Similarly, any changes to the connectivity type of an access network will be included in the information provided during an authentication and authorisation procedure for the UE for the first access network.

In the foregoing specification, the invention has been described with reference to specific examples of embodiments of the invention. It will, however, be evident that various modifications and changes may be made therein without departing from the broader scope of the invention as set forth in the appended claims.

Some of the above embodiments, as applicable, may be implemented using a variety of different processing systems. For example, the Figures and the discussion thereof describe an exemplary architecture which is presented merely to provide a useful reference in discussing various aspects of the disclosure. Of course, the description of the architecture has been simplified for purposes of discussion, and it is just one of many different types of appropriate architectures that may be used in accordance with the disclosure. Those skilled in the art will recognize that the boundaries between program and system/ device elements are merely illustrative and that alternative embodiments may merge elements or impose an alternate decomposition of functionality upon various elements.

## Claims

1. A method for establishing data connectivity between a wireless communication device (108) and a first access network (102), the method comprising at the wireless communication device:
receiving information associated with at least the first access network, the information including a connectivity type of at least the first access network, the connectivity type including one of a first connectivity type when the first access network is configured to establish a connection to a second access network (104) and to tunnel all data traffic from the wireless communication device to the second access network and a second connectivity type when the first access network is configured to not establish a connection to the second access network and to provide direct access to services;
receiving a request to establish data connectivity with the first access network;
determining based on the received information the connectivity type of the first access network;
in response to determining that the first access network is configured to support the first connectivity type, connecting to the first access network and providing connectivity parameters to be used to establish a connection between the first and second access networks;
in response to determining that the first access network is configured to support the second connectivity type, connecting to the first access network and being configured in accordance with the first access network providing access to services directly, and **characterized in that** after connecting to the first access network when the first access network is configured to support the first or second connectivity type, providing a notification to a user, through the wireless communication device, indicating a current connectivity type that the first access network is configured to support.

2. The method of claim 1, further comprising in response to determining that the first access network is configured to support the second connectivity type, connecting to the first access network and not providing connectivity parameters to be used to establish a connection between the first and second access networks.

3. The method of claim 1, further comprising after connecting to the first access network when the first access network is configured to support the first connectivity type, at least one of:
updating the wireless communication device to disable access to local services provided by the first access network;
enabling services provided by the second access network; and
enabling services accessible by the second access network.

4. The method of claim 1, wherein receiving information includes receiving information associated with preferred access networks for the wireless communication device, the preferred access networks including the first access network, the information including the identity of each of the preferred access networks and the connectivity type of at least the first access network.

5. The method of claim 4, wherein receiving information includes receiving information including the connectivity type of the first access network from an ANDSF element.

6. The method of claim 1, wherein receiving information includes receiving information associated with the first access network including the connectivity type of the first access network with at least the second access network during a discovery procedure initiated to discover the capabilities of the first access network.

7. The method of claim 6, wherein the discovery procedure is a discovery procedure defined by one of IEEE 802.11u and RFC4284.

8. The method of claim 1, wherein receiving information includes receiving information including the connectivity type of the first access network during an authentication procedure for authenticating and authorising the wireless communication device for access to the first access network.

9. The method of claim 8, wherein the authentication procedure is an EAP-based authentication procedure.

10. A wireless communication device (108) capable of establishing data connectivity with a first access network (102), comprising:
a communication section (204) for providing wireless communication; and
a processing unit (202) coupled to the communication section,
the wireless communication device being configured to:
receive information associated with at least the first access network, the information including a connectivity type of at least the first access network, the connectivity type including one of a first connectivity type when the first access network is configured to establish a connection to a second access network (104) and to tunnel all data traffic from the wireless communication device to the second access network and a second connectivity type when the first access network is configured to not establish a connection to the second access network and to provide direct access to services,
the processing unit being configured to:
receive a request to establish data connectivity with the first access network;
determine based on the received information the connectivity type of the first access network;
connect to the first access network and provide connectivity parameters to be used to establish a connection between the first and second access networks in response to determining that the first access network is configured to support the first connectivity type
connect to the first access network and configure the wireless communication device in accordance with the first access network providing access to services directly in response to determining that the first access network is configured to support the second connectivity type; and **characterized in that** after connecting to the first access network when the first access network is configured to support the first or second connectivity type, further configured to provide a notification to a user, through the wireless communication device, indicating a current connectivity type that the first access network is configured to support.

11. The wireless communication device of claim 10, wherein the processing unit is further configured, after connecting to the first access network when the first access network is configured to support the first connectivity type, to at least one of:
update the wireless communication device to disable access to local services provided by the first access network;
enable services provided by the second access network; and
enable services accessible by the second access network.

12. The wireless communication device of claim 10, wherein received information includes information associated with preferred access networks for the wireless communication device, the preferred access networks including the first access network, the information including the identity of each of the preferred access networks and the connectivity type of at least the first access network.

13. The wireless communication device of claim 13, wherein the received information is received from an ANDSF element (105).

14. The wireless communication device of claim 10, wherein the processing unit is further configured to initiate a discovery procedure to discover the capabilities of the first access network and wherein received information includes information associated with the first access network received as part of the discovery procedure, the received information including the connectivity type of the first access network with at least the second access network.

15. A communication system (100) comprising a first access network (102) communicably coupled to a second access network (104) and a wireless communication device (108) capable of establishing data connectivity with the first access network,
the wireless communication device, comprising:
a communication section (204) for providing wireless communication; and
a processing unit (202) coupled to the communication section,
the wireless communication device being configured to:
receive information associated with at least the first access network, the information including a connectivity type of at least the first access network, the connectivity type including one of a first connectivity type when the first access network is configured to establish a connection to a second access network and to tunnel all data traffic from the wireless communication device to the second access network and a second connectivity type when the first access network is configured to not establish a connection to the second access network and to provide direct access to services,
the processing unit being configured to:
receive a request to establish data connectivity with the first access network;
determine based on the received information the connectivity type of the first access network;
connect to the first access network and provide connectivity parameters to be used to establish a connection between the first and second access networks in response to determining that the first access network is configured to support the first connectivity type; and
connect to the first access network and configure the wireless communication device in accordance with the first access network providing access to services directly in response to determining that the first access network is configured to support the second connectivity type; and **characterized in that** after connecting to the first access network when the first access network is configured to support the first or second connectivity type, further configured to provide a notification to a user, through the wireless communication device, indicating a current connectivity type that the first access network is configured to support.

## Patentansprüche

1. Verfahren zur Herstellung von Datenkonnektivität zwischen einem drahtlosen Kommunikationsgerät (108) und einem ersten Zugangsnetz (102), wobei das Verfahren auf dem drahtlosen Kommunikationsgerät Folgendes umfasst:
Empfangen von Informationen, die mit zumindest dem ersten Zugangsnetz assoziiert sind, wobei die Informationen einen Konnektivitätstyp zumindest des ersten Zugangsnetzes beinhalten, wobei der Konnektivitätstyp einen aus einem ersten Konnektivitätstyp, wenn das erste Zugangsnetz konfiguriert ist, eine Verbindung zu einem zweiten Zugangsnetz (104) herzustellen und sämtlichen Datenverkehr vom drahtlosen Kommunikationsgerät zum zweiten Zugangsnetz zu tunneln, und einem zweiten Konnektivitätstyp, wenn das erste Zugangsnetz konfiguriert ist, keine Verbindung zum zweiten Zugangsnetz herzustellen und direkten Zugriff auf Dienste bereitzustellen, beinhaltet;
Empfangen einer Anfrage für das Herstellen von Datenkonnektivität mit dem ersten Zugangsnetz;
Bestimmen des Konnektivitätstyps des ersten Zugangsnetzes, basierend auf den empfangenen Informationen;
in Reaktion auf ein Bestimmen, dass das erste Zugangsnetz konfiguriert ist, den ersten Konnektivitätstyp zu unterstützen, Verbinden mit dem ersten Zugangsnetz und Bereitstellen von Konnektivitätsparametern für ein Herstellen einer Verbindung zwischen dem ersten und zweiten Zugangsnetz;
in Reaktion auf ein Bestimmen, dass das erste Zugangsnetz konfiguriert ist, den zweiten Konnektivitätstyp zu unterstützen, Verbinden mit dem ersten Zugangsnetz und Konfiguration gemäß dem ersten Zugangsnetz direktes Bereitstellen von Zugriff auf Dienste, und
**dadurch gekennzeichnet, dass** nach Verbinden mit dem ersten Zugangsnetz, wenn das erste Zugangsnetz konfiguriert ist, den ersten oder zweiten Konnektivitätstyp zu unterstützen, Bereitstellen einer Benachrichtigung an einen Benutzer, durch das drahtlose Kommunikationsgerät, die einen aktuellen Konnektivitätstyp anzeigt, den das erste Zugangsnetz zu unterstützen konfiguriert ist.

2. Verfahren nach Anspruch 1, des Weiteren umfassend, in Reaktion auf ein Bestimmen, dass das erste Zugangsnetz konfiguriert ist, den zweiten Konnektivitätstyp zu unterstützen, Verbinden mit dem ersten Zugangsnetz und kein Bereitstellen von Konnektivitätsparametern für die Herstellung einer Verbindung zwischen dem ersten und zweiten Zugangsnetz.

3. Verfahren nach Anspruch 1, des Weiteren umfassend, nach Verbinden mit dem ersten Zugangsnetz, wenn das erste Zugangsnetz konfiguriert ist, den ersten Konnektivitätstyp zu unterstützen, zumindest eines von:
Aktualisieren des drahtlosen Kommunikationsgeräts, um Zugriff auf lokale Dienste, die durch das erste Zugangsnetz bereitgestellt werden, zu deaktivieren;
Aktivieren von Diensten, die durch das zweite Zugangsnetz bereitgestellt werden; und
Aktivieren von Diensten, auf die durch das zweite Zugangsnetz zugegriffen werden kann.

4. Verfahren nach Anspruch 1, wobei Empfangen von Informationen ein Empfangen von Informationen beinhaltet, die mit bevorzugten Zugangsnetzen für das drahtlose Kommunikationsgerät assoziiert sind, wobei die bevorzugten Zugangsnetze das erste Zugangsnetz beinhalten, und die Informationen die Identität jedes der bevorzugten Zugangsnetze und den Konnektivitätstyp zumindest des ersten Zugangsnetzes beinhalten.

5. Verfahren nach Anspruch 4, wobei Empfangen von Informationen ein Empfangen von Informationen beinhaltet, die den Konnektivitätstyp des ersten Zugangsnetzes aus einem ANDSF-Element beinhalten.

6. Verfahren nach Anspruch 1, wobei Empfangen von Informationen ein Empfangen von Informationen beinhaltet, die mit dem ersten Zugangsnetz, inklusive des Konnektivitätstyps des ersten Zugangsnetzes mit zumindest dem zweiten Zugangsnetz, assoziiert sind, während eines Entdeckungsverfahrens, das initiiert wird, um die Fähigkeiten des ersten Zugangsnetzes zu entdecken.

7. Verfahren nach Anspruch 6, wobei das Entdeckungsverfahren ein Entdeckungsverfahren ist, das durch eines von IEEE 802.11u und RFC4284 definiert ist.

8. Verfahren nach Anspruch 1, wobei Empfangen von Informationen ein Empfangen von Informationen beinhaltet, die den Konnektivitätstyp des ersten Zugangsnetzes während eines Authentifizierungsverfahrens zur Authentifizierung und Autorisierung des drahtlosen Kommunikationsgeräts für Zugriff auf das erste Zugangsnetz beinhalten.

9. Verfahren nach Anspruch 8, wobei das Authentifizierungsverfahren ein EAP-basiertes Authentifizierungsverfahren ist.

10. Drahtloses Kommunikationsgerät (108), das dazu in der Lage ist, Datenkonnektivität mit einem ersten Zugangsnetz (102) herzustellen, umfassend:
eine Kommunikationssektion (204) zum Bereitstellen drahtloser Kommunikation; und
eine Verarbeitungseinheit (202), die mit der Kommunikationssektion gekoppelt ist,
wobei das drahtlose Kommunikationsgerät so konfiguriert ist, dass es:
Informationen empfängt, die mit zumindest dem ersten Zugangsnetz assoziiert sind, wobei die Informationen einen
Konnektivitätstyp zumindest des ersten Zugangsnetzes beinhalten, wobei der Konnektivitätstyp einen aus einem ersten Konnektivitätstyp, wenn das erste Zugangsnetz konfiguriert ist, eine Verbindung zu einem zweiten Zugangsnetz (104) herzustellen und sämtlichen Datenverkehr vom drahtlosen Kommunikationsgerät zum zweiten Zugangsnetz zu tunneln, und einem zweiten Konnektivitätstyp, wenn das erste Zugangsnetz konfiguriert ist, keine Verbindung zum zweiten Zugangsnetz herzustellen und direkten Zugriff auf Dienste bereitzustellen, beinhaltet,
und die Verarbeitungseinheit so konfiguriert ist, dass sie:
eine Anfrage empfängt, Datenkonnektivität mit dem ersten Zugangsnetz herzustellen;
basierend auf den empfangenen Informationen den Konnektivitätstyp des ersten Zugangsnetzes bestimmt;
sich mit dem ersten Zugangsnetz verbindet und Konnektivitätsparameter für die Herstellung einer Verbindung zwischen dem ersten und zweiten Zugangsnetz in Reaktion auf ein Bestimmen, dass das erste Zugangsnetz konfiguriert ist, den ersten Konnektivitätstyp zu unterstützen, bereitstellt
sich mit dem ersten Zugangsnetz verbindet und das drahtlose Kommunikationsgerät gemäß dem konfiguriert, dass das erste Zugangsnetz direkt Zugriff auf Dienste bereitstellt, in Reaktion auf ein Bestimmen, dass das erste Zugangsnetz konfiguriert ist, den zweiten Konnektivitätstyp zu unterstützen; und
**dadurch gekennzeichnet, dass** nach Verbinden mit dem ersten Zugangsnetz, wenn das erste Zugangsnetz konfiguriert ist, den ersten oder zweiten Konnektivitätstyp zu unterstützen, und des Weiteren konfiguriert ist, durch das drahtlose Kommunikationsgerät eine Benachrichtigung an einen Benutzer bereitzustellen, die einen aktuellen Konnektivitätstyp anzeigt, den zu unterstützen das erste Zugangsnetz konfiguriert ist.

11. Drahtloses Kommunikationsgerät nach Anspruch 10, wobei die Verarbeitungseinheit des Weiteren konfiguriert ist, nach Verbinden mit dem ersten Zugangsnetz, wenn das erste Zugangsnetz konfiguriert ist, den ersten Konnektivitätstyp zu unterstützen, um zumindest eines der Folgenden zu tun:
Aktualisieren des drahtlosen Kommunikationsgeräts, um Zugriff auf lokale Dienste, die durch das erste Zugangsnetz bereitgestellt werden, zu deaktivieren;
Aktivieren von Diensten, die durch das zweite Zugangsnetz bereitgestellt werden;
Aktivieren von Diensten, auf die durch das zweite Zugangsnetz zugegriffen werden kann.

12. Drahtloses Kommunikationsgerät nach Anspruch 10, wobei empfangene Informationen Informationen beinhalten, die mit bevorzugten Zugangsnetzen für das drahtlose Kommunikationsgerät assoziiert sind, wobei die bevorzugten Zugangsnetze das erste Zugangsnetz beinhalten, und die Informationen die Identität jedes der bevorzugten Zugangsnetze und den Konnektivitätstyp zumindest des ersten Zugangsnetzes beinhalten.

13. Drahtloses Kommunikationsgerät nach Anspruch 13, wobei die empfangenen Informationen von einem ANDSF-Element (105) empfangen werden.

14. Drahtloses Kommunikationsgerät nach Anspruch 10, wobei die Verarbeitungseinheit des Weiteren konfiguriert ist, ein Entdeckungsverfahren zu initiieren, um die Fähigkeiten des ersten Zugangsnetzes zu entdecken, und wobei empfangene Informationen mit dem ersten Zugangsnetz assoziierte Informationen beinhalten, die als Teil des Entdeckungsvorgangs empfangen wurden, wobei die empfangenen Informationen den Konnektivitätstyp des ersten Zugangsnetzes mit zumindest dem zweiten Zugangsnetz beinhalten.

15. Kommunikationssystem (100), umfassend ein erstes Zugangsnetz (102), das mit einem zweiten Zugangsnetz (104) und einem drahtlosen Kommunikationsgerät (108), das in der Lage ist, Datenkonnektivität mit dem ersten Zugangsnetz herzustellen, kommunikativ gekoppelt ist,
wobei das drahtlose Kommunikationsgerät Folgendes umfasst:
eine Kommunikationssektion (204) zum Bereitstellen drahtloser Kommunikation; und
eine Verarbeitungseinheit (202), die mit der Kommunikationssektion gekoppelt ist,
wobei das drahtlose Kommunikationsgerät so konfiguriert ist, dass es:
Informationen empfängt, die mit zumindest dem ersten Zugangsnetz assoziiert sind, wobei die Informationen einen Konnektivitätstyp zumindest des ersten Zugangsnetzes beinhalten, wobei der Konnektivitätstyp einen aus einem ersten Konnektivitätstyp, wenn das erste Zugangsnetz konfiguriert ist, eine Verbindung zu einem zweiten Zugangsnetz herzustellen und sämtlichen Datenverkehr vom drahtlosen Kommunikationsgerät zum zweiten Zugangsnetz zu tunneln, und einem zweiten Konnektivitätstyp, wenn das erste Zugangsnetz konfiguriert ist, keine Verbindung zum zweiten Zugangsnetz herzustellen und direkten Zugriff auf Dienste bereitzustellen, beinhaltet,
und die Verarbeitungseinheit so konfiguriert ist, dass sie:
eine Anfrage empfängt, Datenkonnektivität mit dem ersten Zugangsnetz herzustellen;
basierend auf den empfangenen Informationen den Konnektivitätstyp des ersten Zugangsnetzes bestimmt;
sich mit dem ersten Zugangsnetz verbindet und Konnektivitätsparameter für die Herstellung einer Verbindung zwischen dem ersten und zweiten Zugangsnetz in Reaktion auf ein Bestimmen, dass das erste Zugangsnetz konfiguriert ist, den ersten Konnektivitätstyp zu unterstützen, bereitstellt; und
sich mit dem ersten Zugangsnetz verbindet und das drahtlose Kommunikationsgerät gemäß dem konfiguriert,
dass das erste Zugangsnetz direkt Zugriff auf Dienste bereitstellt, in Reaktion auf ein Bestimmen, dass das erste Zugangsnetz konfiguriert ist, den zweiten Konnektivitätstyp zu unterstützen; und
**dadurch gekennzeichnet, dass** nach Verbinden mit dem ersten Zugangsnetz, wenn das erste Zugangsnetz konfiguriert ist, den ersten oder zweiten Konnektivitätstyp zu unterstützen, und des Weiteren konfiguriert ist, durch das drahtlose Kommunikationsgerät eine Benachrichtigung an einen Benutzer bereitzustellen, die einen aktuellen Konnektivitätstyp anzeigt, den zu unterstützen das erste Zugangsnetz konfiguriert ist.

## Revendications

1. Procédé pour l'établissement d'une connectivité de données entre un dispositif de communication sans fil (108) et un premier réseau d'accès (102), le procédé comprenant, au niveau du dispositif de communication sans fil :
la réception d'informations associées au moins au premier réseau d'accès, les informations incluant un type de connectivité au moins du premier réseau d'accès, le type de connectivité incluant un type de connectivité parmi un premier type de connectivité lorsque le premier réseau d'accès est configuré pour établir une connexion à un deuxième réseau d'accès (104) et pour envoyer par tunnel tout le trafic de données du dispositif de communication sans fil vers le deuxième réseau d'accès, et un deuxième type de connectivité lorsque le premier réseau d'accès est configuré pour ne pas établir une connexion vers le deuxième réseau d'accès et pour fournir un accès direct aux services ;
la réception d'une demande pour établir une connectivité de données avec le premier réseau d'accès ;
la détermination, basée sur l'information reçue, du type de connectivité du premier réseau d'accès ;
en réponse à la détermination que le premier réseau d'accès est configuré pour prendre en charge le premier type de connectivité, la connexion au premier réseau d'accès et la fourniture de paramètres de connectivité à utiliser pour établir une connexion entre les premier et deuxième réseaux d'accès ;
en réponse à la détermination que le premier réseau d'accès est configuré pour prendre en charge le deuxième type de connectivité, la connexion au premier réseau d'accès, et étant configuré conformément au premier réseau d'accès, la fourniture directe de l'accès aux services, et
**caractérisé en ce qu'**après la connexion au premier réseau d'accès lorsque le premier réseau d'accès est configuré pour prendre en charge les premier et deuxième types de connectivité, la fourniture d'une notification à un utilisateur, via le dispositif de communication sans fil, indiquant un type de connectivité en cours que le premier réseau d'accès est configuré pour prendre en charge.

2. Procédé selon la revendication 1, comprenant en outre, en réponse à la détermination que le premier réseau d'accès est configuré pour prendre en charge le deuxième type de connectivité, la connexion au premier réseau d'accès et la non fourniture de paramètres de connectivité à utiliser pour établir une connexion entre les premier et deuxième réseaux d'accès.

3. Procédé selon la revendication 1, comprenant en outre, après la connexion au premier réseau d'accès lorsque le premier réseau d'accès est configuré pour prendre en charge le premier type de connectivité, au moins un évènement parmi :
une actualisation du dispositif de communication sans fil pour désactiver l'accès aux services locaux fourni par le premier réseau d'accès ;
une activation des services fournis par le deuxième réseau d'accès ; et
une activation des services accessibles par le deuxième réseau d'accès.

4. Procédé selon la revendication 1, dans lequel la réception d'informations inclut la réception d'informations associées aux réseaux d'accès préférés pour le dispositif de communication sans fil, les réseaux d'accès préférés incluant le premier réseau d'accès, les informations incluant l'identité de chacun des réseaux d'accès préférés et le type de connectivité au moins du premier réseau d'accès.

5. Procédé selon la revendication 4, dans lequel la réception d'informations inclut la réception d'informations incluant le type de connectivité du premier réseau d'accès depuis un élément ANDSF.

6. Procédé selon la revendication 1, dans lequel la réception d'informations inclut la réception d'informations associées avec le premier réseau d'accès incluant le type de connectivité du premier réseau d'accès avec au moins le deuxième réseau d'accès pendant une procédure de découverte lancée pour découvrir les capacités du premier réseau d'accès.

7. Procédé selon la revendication 6, dans lequel la procédure de découverte est une procédure de découverte définie par une norme parmi l'IEEE 802.11u et la RFC4284.

8. Procédé selon la revendication 1, dans lequel la réception d'informations inclut la réception d'informations incluant le type de connectivité du premier réseau d'accès pendant une procédure d'authentification pour authentifier et autoriser le dispositif de communication sans fil à accéder au premier réseau d'accès.

9. Procédé selon la revendication 8, dans lequel la procédure d'authentification est une procédure d'authentification basée sur le protocole EAP.

10. Dispositif de communication sans fil (108) capable d'établir une connectivité de données avec un premier réseau d'accès (102), comprenant :
une section de communication (204) pour fournir une communication sans fil ; et
une unité de traitement (202) couplée à la section de communication,
le dispositif de communication sans fil étant configuré pour :
la réception d'informations associées au moins au premier réseau d'accès, les informations incluant un type de connectivité au moins du premier réseau d'accès, le type de connectivité incluant un type de connectivité parmi un premier type de connectivité lorsque le premier réseau d'accès est configuré pour établir une connexion à un deuxième réseau d'accès (104) et pour envoyer par tunnel tout le trafic de données du dispositif de communication sans fil vers le deuxième réseau d'accès et un deuxième type de connectivité lorsque le premier réseau d'accès est configuré pour ne pas établir une connexion vers le deuxième réseau d'accès et pour fournir un accès direct aux services,
l'unité de traitement étant configurée pour :
la réception d'une demande pour établir une connectivité de données avec le premier réseau d'accès ;
la détermination, sur la base de l'information reçue, du type de connectivité du premier réseau d'accès ;
la connexion au premier réseau d'accès et la fourniture de paramètres de connectivité à utiliser pour établir une connexion entre les premier et deuxième réseaux d'accès en réponse à la détermination que le premier réseau d'accès est configuré pour prendre en charge le premier type de connectivité
la connexion au premier réseau d'accès et la configuration du dispositif de communication sans fil conformément au premier réseau d'accès fournissant un accès direct aux services en réponse à la détermination que le premier réseau d'accès est configuré pour prendre en charge le deuxième type de connectivité ; et
**caractérisé en ce qu'**après la connexion au premier réseau d'accès, lorsque le premier réseau d'accès est configuré pour prendre en charge les premier et deuxième types de connectivité, configuré en outre pour fournir une notification à un utilisateur, via le dispositif de communication sans fil, l'indication d'un type de connectivité en cours que le premier réseau d'accès est configuré pour le prendre en charge.

11. Dispositif de communication sans fil selon la revendication 10, dans lequel l'unité de traitement est configurée en outre, après la connexion au premier réseau d'accès lorsque le premier réseau d'accès est configuré pour prendre en charge le premier type de connectivité, à au moins un évènement parmi :
une actualisation du dispositif de communication sans fil pour désactiver l'accès aux services locaux fourni par le premier réseau d'accès ;
une activation des services fournis par le deuxième réseau d'accès ;
une activation des services accessibles par le deuxième réseau d'accès.

12. Dispositif de communication sans fil selon la revendication 10, dans lequel l'information reçue inclut des informations associées aux réseaux d'accès préférés pour le dispositif de communication sans fil, les réseaux d'accès préférés incluant le premier réseau d'accès, les informations incluant l'identité de chacun des réseaux d'accès préférés et le type de connectivité au moins du premier réseau d'accès.

13. Dispositif de communication sans fil selon la revendication 13, dans lequel l'information reçue est reçue depuis un élément ANDSF (105).

14. Dispositif de communication sans fil selon la revendication 10, dans lequel l'unité de traitement est configurée en outre pour débuter une procédure de découverte pour découvrir les capacités du premier réseau d'accès et où l'information reçue inclut des informations associées avec le premier réseau d'accès reçu dans le cadre de la procédure de découverte, l'information reçue incluant le type de connectivité du premier réseau d'accès avec au moins le deuxième réseau d'accès.

15. Système de communication (100) comprenant un premier réseau d'accès (102) couplé de manière communicative à un deuxième réseau d'accès (104) et un dispositif de communication sans fil (108) capable d'établir une connectivité de données avec le premier réseau d'accès, le dispositif de communication sans fil, comprenant :
une section de communication (204) pour fournir une communication sans fil ; et
une unité de traitement (202) couplée à la section de communication,
le dispositif de communication sans fil étant configuré pour :
la réception d'informations associées au moins au premier réseau d'accès, les informations incluant un type de connectivité au moins du premier réseau d'accès, le type de connectivité incluant un type de connectivité parmi un premier type de connectivité lorsque le premier réseau d'accès est configuré pour établir une connexion vers un deuxième réseau d'accès et pour envoyer par tunnel tout le trafic de données du dispositif de communication sans fil au deuxième réseau d'accès et un deuxième type de connectivité lorsque le premier réseau d'accès est configuré pour ne pas établir une connexion vers le deuxième réseau d'accès et pour fournir un accès direct aux services,
l'unité de traitement étant configurée pour :
la réception d'une demande pour établir une connectivité de données avec le premier réseau d'accès ;
la détermination, sur la base de l'information reçue, du type de connectivité du premier réseau d'accès ;
la connexion au premier réseau d'accès et la fourniture de paramètres de connectivité à utiliser pour établir une connexion entre les premier et deuxième réseaux d'accès en réponse à la détermination que le premier réseau d'accès est configuré pour prendre en charge le premier type de connectivité ; et
la connexion au premier réseau d'accès et la configuration du dispositif de communication sans fil conformément au premier réseau d'accès fournissant l'accès direct aux services en réponse à la détermination que le premier réseau d'accès est configuré pour prendre en charge le deuxième type de connectivité ; et
**caractérisé en ce qu'**après la connexion au premier réseau d'accès, lorsque le premier réseau d'accès est configuré pour prendre en charge les premier et deuxième types de connectivité, configuré en outre pour fournir une notification à l'utilisateur, via le dispositif de communication sans fil, l'indication d'un type de connectivité en cours que le premier réseau d'accès est configuré pour prendre en charge.
